# EUROPÄISCHE PATENTANMELDUNG

(11) **EP 1 860 551 A1**
(43) Veröffentlichungstag der Anmeldung: **28.11.2007**
(21) Anmeldenummer: 06010536.8
(22) Anmeldetag: 22.05.2006
(51) Int. Cl.: G06F 9/445

(54) **Verfahren und Vorrichtung zur Erfassung einer Modifikation eines Softwarestandes**

(71) Anmelder: SIEMENS AKTIENGESELLSCHAFT, 80333 München (DE)
(72) Erfinder: Burger, Thomas, 93051 Regensburg (DE)

(57) **Zusammenfassung**

Das erfindungsgemäße Verfahren zur Erfassung einer Modifikation eines Softwarestandes eines Steuergeräts eines Kraftfahrzeuges weist die folgenden Schritte auf:
- Durchführen einer Modifikationsprüfung des in dem Steuergerät aktuell geladenen Softwarestandes, welche zumindest einen von der Modifikationsprüfung abhängigen ersten Parameter bereitstellt und dazu geeignet ist, zumindest eine Modifikation des aktuell geladenen Softwarestandes gegenüber einem Original-Softwarestand festzustellen;
- Durchführen einer Zulässigkeitsprüfung einer festgestellten Modifikation, welche zumindest einen von der Zulässigkeitsprüfung abhängigen zweiten Parameter bereitstellt; und
- Übertragen eines Parametersatzes, welcher zumindest den ersten Parameter und den zweiten Parameter beinhaltet, von dem Steuergerät an eine Empfangsvorrichtung.

## Beschreibung

Die Erfindung betrifft ein Verfahren und eine Vorrichtung zur Erfassung einer Modifikation eines Softwarestandes eines von einem Steuergerätevertreiber vertriebenen Steuergeräts.

Ein Softwarestand ist insbesondere eine Steuergerätesoftware eines Steuergeräts, insbesondere eines Motorsteuergeräts für Kraftfahrzeuge mit Verbrennungsmotoren, wie Benzin- oder Dieselmotoren, oder auch Elektromotoren. Dabei bezeichnet der Begriff Motorsteuerung sowohl mindestens ein Motorsteuergerät als auch einen Komplex von Funktionalitäten, die zur Steuerung eines Motors verwendet werden.

Die Steuerung der vielfältigen und komplexen Prozesse in modernen Verbrennungskraftmaschinen zählt zu den bedeutendsten Anwendungsbereichen der Mikroelektronik. Dabei spielen beispielsweise die Regelung der elektronischen Zündsysteme und der Leerlauf-Drehzahl sowie die Lambdaregelung eine herausragende Rolle. Eine aktive Motorregelung und eine adaptive Getrieberegelung sind wesentliche Mittel zur Anpassung der Systeme an die jeweilige Fahrsituation. Diese Regelungsmechanismen werden durch moderne Motorsteuergeräte mit einem definierten Softwarestand realisiert. Die Motorsteuergeräte werden durch den Hersteller oder den Steuergerätevertreiber mit einer Original-Steuergerätesoftware ausgestattet, die einen genau definierten Original-Softwarestand hat. Der Original-Softwarestand wird mit dem entsprechenden Steuergerät an den Kunden ausgeliefert.

Häufig setzt der Kunde in der Entwicklungsphase von Funktionseinheiten des Steuergeräts oder Motorsteuergeräts Tools für die Durchführung von Rapid-Prototyping-Verfahren ein. Dabei ist es dem zuständigen Funktionsentwickler möglich, die von ihm spezifizierte Funktionalität ohne eine aufwändige Erzeugung neuer regulärer Softwarestände im Fahrzeug in Echtzeit zu validieren und zu verbessern. Es existieren Rapid-Prototyping-Tools, mit denen eine bestimmte Funktionalität direkt in einen regulären Softwarestand oder Original-Softwarestand integriert werden kann und mit denen fast an jeder beliebigen Stelle der regulären Steuergerätesoftware ein Aufruf der integrierten Funktionalitäten implementiert werden kann.

Somit hat der Funktionsentwickler sehr große Freiheiten beim Modifizieren der regulären Steuergerätesoftware bzw. des Original-Softwarestandes. Nach der Modifikation kann in der Regel nicht mehr festgestellt werden, in welche Teile der Steuergerätesoftware der Funktionsentwickler modifizierend eingegriffen hat. Dies kann ein beträchtliches Sicherheitsrisiko darstellen. Weiterhin ist es für den Funktionsentwickler auf Grund der ihm gegebenen Freiheiten auch nicht mehr offensichtlich, welche Teile der Motorsteuergerätefunktionalität bzw. des Original-Softwarestandes durch die Modifikation beeinträchtigt wurden oder ob er sogar eine ungewollte Modifikation vorgenommen hat. Außerdem muss diese Problematik auch über das Anwendungsgebiet des Rapid-Prototyping hinaus gesehen werden, da auch in anderen Situationen Modifikationen, die ohne Zustimmung des Steuergerätevertreibers oder Steuergeräteherstellers vorgenommen werden, zu einem hohen Sicherheitsrisiko führen können. Eine solche Situation stellt beispielsweise das vom Steuergerätvertreiber nicht zugelassene Steuergeräte-Tuning dar.

Um obenstehender Problematik zumindest teilweise zu begegnen, hat die Anmelderin am 15.12.2004 eine Patentanmeldung mit dem Titel "Erkennung und Anzeige von Modifikationen an Softwareständen für Motorsteuergerätesoftware" beim Deutschen Patent- und Markenamt, Aktenzeichen 10 2004 06033.2, eingereicht.

Diese vorangemeldete Patentanmeldung stellt ein Verfahren mit einem Konsistenzschutz und einem Modifikationsschutz der Steuergerätesoftware bereit. Der Konsistenzschutz wird durch eine Checksummenüberprüfung des aktuell geladenen Softwarestandes durchgeführt. Stimmt der aktuell geladene Softwarestand nicht mit dem Original-Softwarestand überein, wird nachfolgend eine Modifikationsüberprüfung durchgeführt, die erkennt, ob die durchgeführte Modifikation vom Steuergerätvertreiber oder Hersteller zugelassen ist oder nicht zugelassen ist. Durch diesen Modifikationsschutz wird sichergestellt, dass der Motorbetrieb bei einer nicht zugelassenen Modifikation gesperrt wird.

Der vorliegenden Erfindung liegt nun die Aufgabe zugrunde, einen Steuergerätevertreiber bei einer Modifikation des Original-Softwarestandes eines von ihm vertriebenen Steuergeräts zu unterrichten, insbesondere automatisch zu unterrichten.

Weiterhin ist es eine Aufgabe, einen Steuergerätevertreiber bei einer Modifikation des Original-Softwarestandes eines von ihm vertriebenen Steuergeräts möglichst schnell, insbesondere in Echtzeit zu informieren.

Erfindungsgemäß wird zumindest eine dieser gestellten Aufgaben durch ein Verfahren mit den Merkmalen des Patentanspruchs 1 und/oder durch eine Vorrichtung mit den Merkmalen des Patentanspruchs 16 gelöst.

Demnach wird erfindungsgemäß ein Verfahren zur Erfassung einer Modifikation eines Softwarestandes eines Steuergeräts eines Kraftfahrzeuges mit den folgenden Schritten vorgeschlagen:
- Durchführen einer Modifikationsprüfung des in dem Steuergerät aktuell geladenen Softwarestandes, welche zumindest einen von der Modifikationsprüfung abhängigen ersten Parameter bereitstellt und dazu geeignet ist, zumindest eine Modifikation des aktuell geladenen Softwarestandes gegenüber einem Original-Softwarestand festzustellen;
- Durchführen einer Zulässigkeitsprüfung einer festgestellten Modifikation, welche zumindest einen von der Zulässigkeitsprüfung abhängigen zweiten Parameter bereitstellt; und
- Übertragen eines Parametersatzes, welcher zumindest den ersten Parameter und den zweiten Parameter beinhaltet, von dem Steuergerät an eine Empfangsvorrichtung.

Außerdem wird eine Vorrichtung zur Durchführung des oben erläuterten Verfahrens vorgeschlagen, welches aufweist:
- eine Modifikationsprüfeinheit, welche eine Modifikationsprüfung des in dem Steuergerät aktuell geladenen Softwarestandes durchführt, wobei die Modifikationsprüfeinheit zumindest einen von der Modifikationsprüfung abhängigen ersten Parameter bereitstellt und dazu geeignet ist, zumindest eine Modifikation des aktuell geladenen Softwarestandes gegenüber einem Original-Softwarestand festzustellen;
- eine Zulässigkeitsprüfeinheit, welche eine Zulässigkeitsprüfung einer festgestellten Modifikation durchführt, wobei die Zulässigkeitsprüfeinheit zumindest einen von der Zulässigkeitsprüfung abhängigen zweiten Parameter bereitstellt; und
- eine Übertragungseinheit, welche einen Parametersatz, der zumindest den ersten Parameter und den zweiten Parameter beinhaltet, an eine Empfangsvorrichtung überträgt.

Ein Vorteil der vorliegenden Erfindung liegt darin, dass eine die Empfangsvorrichtung aufweisende Autorität, beispielsweise der Steuergerätehersteller des Steuergeräts oder der Steuergerätevertreiber oder ein von dem Steuergerätehersteller oder dem Steuergerätevertreiber autorisierter Partner, zum Beispiel eine Werkstatt, über jegliche Modifikationen des Original-Softwarestandes mittels des übertragenen Parametersatzes informiert oder unterrichtet wird. Insbesondere wird die Übertragung des Parametersatzes sofort nach der Durchführung der Zulässigkeitsprüfung durchgeführt, sodass der Steuergerätehersteller ohne Zeitverlust reagieren kann, wenn durch die Modifikation beispielsweise kritische Situationen verursacht werden könnten. Der Steuergerätevertreiber kann auf Grund des empfangenen Parametersatzes beurteilen, ob es zu ungewollten Modifikationen an der Steuergerätesoftware gekommen ist. Der Steuergerätehersteller kann also ohne jegliche Latenzzeit reagieren, wenn sicherheitskritische Stellen der Steuergerätesoftware gewollt oder auch ungewollt modifiziert worden sind. Insbesondere kann unerlaubtes Tuning der Steuergerätesoftware deutlich besser als bisher aufgespürt und verfolgt werden. Der Steuergerätevertreiber kann auch der Steuergerätehersteller sein.

Vorteilhafte Ausgestaltungen und Weiterbildungen der Erfindung ergeben sich aus den Unteransprüchen sowie der Beschreibung unter Bezugnahme auf die Zeichnungen.

Gemäß einer bevorzugten Ausgestaltung der Erfindung wird der Parametersatz an eine Empfangsvorrichtung eines Steuergerätevertreibers, der das Steuergerät vertreibt, übertragen.

Gemäß einer weiteren bevorzugten Ausgestaltung sind/ist der erste Parameter als eine Checksumme des aktuell geladenen Softwarestandes und/oder der zweite Parameter als ein Label des aktuell geladenen Softwarestandes (aSW) ausgebildet, wobei das Label mit vorbestimmten Kontrollwerten verglichen wird.

Gemäß einer weiteren bevorzugten Ausgestaltung wird eine Vergleichsprüfung zumindest eines Teils des aktuell geladenen Softwarestandes mit zumindest einem entsprechenden Teil eines Duplikates des Original-Softwarestandes oder eine Modifikationsprüfung zumindest eines Teils des in dem Steuergerät aktuell geladenen Softwarestandes (aSW) durchgeführt, bei welcher zumindest eine Positionsangabe, die eine Position der Modifikation oder mehrere Positionen der Modifikationen des aktuell geladenen Softwarestandes angibt, und/oder eine Umfangsangabe, die den Umfang der Modifikationen oder der Modifikationen des aktuell geladenen Softwarestandes gegenüber dem Original-Softwarestand angibt, und/oder die modifizierten Teilbereiche des aktuell geladenen Softwarestandes, die gegenüber dem Original-Softwarestand modifiziert sind, bereitgestellt werden. Vorteilhafterweise kann der Steuergerätevertreiber durch die Positionsangabe der Modifikation exakt und sehr schnell nachvollziehen, an welcher Stelle die Modifikation durchgeführt wurde und insbesondere welche Folgen eine solche Modifikation für die Steuergerätesoftware und somit auch für die Sicherheit hat. Weitere Informationen erhält der Steuergerätevertreiber durch die Umfangsangabe, die beispielsweise in Prozent angibt, welcher Anteil des Original-Softwarestandes modifiziert wurde. Eine exakte Analyse der Modifikation kann der Steuergerätehersteller nach Erhalt der modifizierten Teilbereiche des aktuell in dem Steuergerät geladenen Softwarestandes durchführen.

Gemäß einer bevorzugten Weiterbildung der Erfindung beinhaltet der Parametersatz weiter:
- die Positionsangabe der Modifikationen des aktuell geladenen Softwarestandes und/oder
- die Umfangsangabe der Modifikation des aktuell geladenen Softwarestandes und/oder
- die modifizierten Teilbereiche des aktuell geladenen Softwarestandes und/oder
- eine weltweite Positionsangabe des Steuergeräts, welche beispielsweise durch ein Global-Positioning-Verfahren (GPS) erhalten wird und/oder
- eine Seriennummer oder eine Hardware-Kennung des Steuergeräts und/oder
- eine Modifikationsangabe, die angibt, durch welche Modifikationseinheit, insbesondere Rapid-Prototyping-Einheit, die Modifikation des Original-Softwarestandes durchgeführt wurde.

Gemäß einer weiteren bevorzugten Weiterbildung wird eine Modifikation des Original-Softwarestandes nur zugelassen, falls das Steuergerät eine eindeutige Kennzeichnung, insbesondere Seriennummer, oder Hardware-Kennung aufweist.

Gemäß einer weiteren bevorzugten Ausgestaltung wird das Übertragen des Parametersatzes an die Empfangsvorrichtung des Steuergerätevertreibers mittels einer Übertragungseinheit durchgeführt, welche als Funkübertragungseinheit, als eine satellitengestützte Übertragungseinheit, als eine Telekommunikationseinrichtung des Kraftfahrzeuges, als ein Telematiksystem des Kraftfahrzeuges, als ein durch ein Diagnosegerät auslesbarer Speicher oder als eine Speicherkarte ausgebildet ist, die in das Steuergerät einsteckbar ist. Die Funkübertragungseinheit, die satellitengestützte Übertragungseinheit, die Telekommunikationseinrichtung als Übertragungseinheit und auch das Telematiksystem als Übertragungseinheit bieten alle den Vorteil, den Steuergerätevertreiber ohne jegliche Latenzzeiten über potenzielle Modifikationen zu unterrichten. Beispielsweise ist es bei Telematiksystemen auch möglich, dass die Übertragungseinheit nur an vorbestimmte Empfangsvorrichtungen beispielsweise an Autobahnen sendet. Eine solche Lösung hätte deutliche Kostenvorteile. Die als Speicherkarte ausgebildete Übertragungseinheit hingegen hat den Vorteil, dass sie sehr kostengünstig ist und beispielsweise von einer Autowerkstatt sehr einfach ausgelesen werden kann.

Gemäß einer weiteren bevorzugten Weiterbildung wird eine Modifikation des Original-Softwarestandes nur als zulässig interpretiert, falls das Steuergerät die Übertragungseinheit aufweist. Somit wird vorteilhafterweise verhindert, dass eine Modifikation des Original-Softwarestandes eines Steuergerätes ohne Übertragungseinheit durchgeführt werden kann. Eine Modifikation ist also nur durchführbar, wenn das Steuergerät selbst nach außen, insbesondere zum entsprechenden Steuergerätevertreiber oder Steuergerätehersteller kommunizieren kann.

Gemäß einer weiteren bevorzugten Ausgestaltung wird eine Modifikation des Original-Softwarestandes mittels Rapid-Prototyping durchgeführt.

Gemäß einer weiteren bevorzugten Weiterbildung wird nach der Durchführung einer Modifikationsüberprüfung, welche feststellt, dass der aktuell geladene Softwarestand dem Original-Softwarestand entspricht, eine Statusmeldung, welche den unmodifizierten Status des Original-Softwarestandes angibt, an die Empfangsvorrichtung des Steuergerätevertreibers jeweils nach Ablauf eines vorbestimmten Zeitintervalls übertragen. Somit hat der Steuergerätevertreiber einen optimalen Überblick über die von ihm vertriebenen Steuergeräte. Insbesondere kann der Steuergerätevertreiber durch Erhalt der Statusmeldung sicher sein, dass nicht das Übertragen des Parametersatzes, beispielsweise durch ein unzulässiges Tuning unterdrückt wird.

Gemäß einer weiteren bevorzugten Ausgestaltung werden die Kontrollwerte in dem Steuergerät gespeichert und entsprechen jeweils einer vom Steuergerätevertreiber zugelassenen Modifikation des Original-Softwarestandes.

Weiterhin wird ein Computerprogramm mit Programmcode-Mitteln vorgeschlagen, um das oben erläuterte Verfahren durchzuführen, wenn das Programm auf einem Steuergerät oder einem Computer ausgeführt wird.

Des Weiteren wird ein Computerprogramm mit Programmcode-Mitteln vorgeschlagen, um das oben erläuterte Verfahren durchzuführen, wobei die Programmcode-Mittel auf einem computerlesbaren Datenträger gespeichert sind.

Weiterhin wird ein Datenträger vorgeschlagen, auf dem eine Datenstruktur gespeichert ist, die nach einem Laden in einen Arbeits- und/oder Hauptspeicher eines Computers oder eines Steuergeräts das oben erläuterte Verfahren ausführt.

Außerdem wird ein Computerprogramm-Produkt mit auf einem maschinenlesbaren Träger gespeicherten Programmcode-Mittel vorgeschlagen, um alle Schritte des oben erläuterten Verfahrens durchzuführen, wenn das Programm auf einem Steuergerät oder einem Computer ausgeführt wird.

Die Erfindung wird nachfolgend anhand der in den schematischen Figuren angegebenen Ausführungsbeispiele näher erläutert. Es zeigen:
- Fig. 1: ein schematisches Ablaufdiagramm eines ersten Ausführungsbeispiels des erfindungsgemäßen Verfahrens;
- Fig. 2: ein schematisches Ablaufdiagramm eines zweiten Ausführungsbeispiels des erfindungsgemäßen Verfahrens;
- Fig. 3: ein schematisches Blockschaltbild eines bevorzugten Ausführungsbeispiels der erfindungsgemäßen Vorrichtung; und
- Fig. 4: ein schematisches Blockdiagramm eines bevorzugten Ausführungsbeispiels des Parametersatzes gemäß der vorliegenden Erfindung.

In allen Figuren sind gleiche bzw. funktionsgleiche Elemente und Einheiten - sofern nichts anderes angegeben ist - mit denselben Bezugszeichen versehen worden.

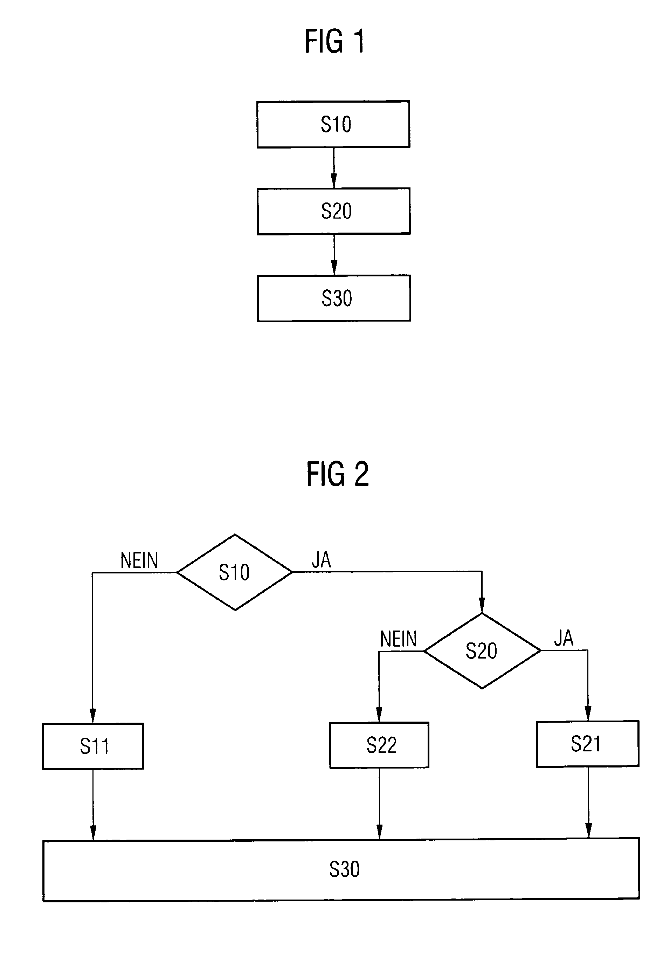

Nachfolgend wird ein erstes Ausführungsbeispiel des erfindungsgemäßen Verfahrens zur Erfassung einer Modifikation eines Softwarestandes eines von einem Steuergerätevertreiber 1 vertriebenen Steuergeräts 8 eines Kraftfahrzeuges anhand des Blockschaltbildes in Fig. 1 erläutert. Das erfindungsgemäße Verfahren weist folgende Verfahrensschritte S10 bis S30 auf.

### Verfahrensschritt S10:

Es wird eine Modifikationsprüfung des in dem Steuergerät 8 aktuell geladenen Softwarestandes aSW durchgeführt. Die Modifikationsprüfung stellt vorzugsweise zumindest eine Checksumme Cks des aktuell geladenen Softwarestandes aSW bereit und stellt dadurch eine potenzielle Modifikation des aktuell geladenen Softwarestandes aSW gegenüber einem Original-Softwarestand des Steuergerätevertreibers 1 fest.

### Verfahrensschritt S20:

Es wird eine Zulässigkeitsprüfung durchgeführt, falls eine Modifikation festgestellt wurde. Bei der Zulässigkeitsprüfung wird vorzugsweise ein Label L des aktuell geladenen Softwarestandes aSW mit vorbestimmten Kontrollwerten K verglichen. Die Kontrollwerte K repräsentieren jeweils vom Steuergerätevertreiber 1 zugelassene Modifikationen des Original-Softwarestandes. Die Zulässigkeitsprüfung hat als Ergebnis, dass die festgestellte Modifikation als zulässig interpretiert wird, falls das Label L mit einem der Kontrollwerte K übereinstimmt, oder dass die Modifikation als nicht zulässig interpretiert wird, falls das Label L mit keinem der Kontrollwerte K übereinstimmt.

### Verfahrensschritt S30:

Nach Durchführung der Zulässigkeitsprüfung wird ein Parametersatz P von dem Steuergerät 8 an eine Empfangsvorrichtung 2 des Steuergerätevertreibers 1 übertragen. Der Parametersatz P beinhaltet vorzugsweise zumindest die Checksumme Cks und das Label L des aktuell geladenen Softwarestandes aSW. Der Steuergerätevertreiber 1 kann auch der Hersteller des Steuergerätes 8 sein.

Fig. 2 zeigt ein schematisches Ablaufdiagramm eines zweiten Ausführungsbeispiels des erfindungsgemäßen Verfahrens. Das erfindungsgemäße Verfahren weist die Verfahrensschritte S10, S11, S20, S21, S22 und S30 auf. Dazu im Einzelnen:

### Verfahrensschritt S10:

Zunächst wird eine Modifikationsüberprüfung des in dem Steuergerät 8 aktuell geladenen Softwarestandes aSW durchgeführt. Die Modifikationsprüfung beinhaltet vorzugsweise eine Checksummenüberprüfung und/oder eine Vergleichsprüfung. Bei der Checksummenüberprüfung wird eine Checksumme Cks des aktuell geladenen Softwarestandes aSW berechnet und mit einer Checksumme des Original-Softwarestandes, welche in dem Steuergerät gespeichert ist, verglichen. Bei der Vergleichsprüfung wird der aktuell geladene Softwarestand aSW mit einem Duplikat des Original-Softwarestandes verglichen. Die Vergleichsprüfung besitzt als mögliche Ergebnisse: Eine Positionsangabe PSM, die eine Position der Modifikation oder mehrere Positionen der Modifikationen des aktuell geladenen Softwarestandes aSW angibt, und/oder eine Umfangsangabe U, die den Umfang der Modifikation oder der Modifikation des aktuell geladenen Softwarestandes aSW gegenüber dem Original-Softwarestand angibt, und/oder die modifizierten Teilbereiche modT des aktuell geladenen Softwarestandes aSW, die gegenüber dem Original-Softwarestand modifiziert sind. Der Original-Softwarestand kann in dem Steuergerät 8 oder in einer zusätzlichen, mit dem Steuergerät 8 koppelbaren Einheit abgespeichert sein. Die zusätzliche Einheit kann beispielsweise ein Diagnosegerät sein.

Allerdings ist eine Modifikation des Original-Softwarestandes nur dann zugelassen, falls das Steuergerät 8 eine vorbestimmte Seriennummer SN oder Hardware-Kennung HW aufweist. Auch ist die Modifikation des Original-Softwarestandes nur dann zugelassen, falls das Steuergerät 8 eine Übertragungseinheit 5 aufweist. Ist die Modifikation zugelassen, so kann diese beispielsweise mittels eines Rapid-Prototyping-Verfahrens durchgeführt werden.

Ergibt die Modifikationsprüfung, dass eine Modifikation durchgeführt wurde (JA), so folgt im Anschluss Verfahrensschritt S20. Ergibt die Modifikationsprüfung S10 allerdings, dass keine Modifikation durchgeführt wurde (NEIN), so folgt Verfahrensschritt S11.

### Verfahrensschritt S20:

Es wird eine Zulässigkeitsprüfung durchgeführt, falls eine Modifikation festgestellt wurde. Bei der Zulässigkeitsprüfung wird ein Label L des aktuell geladenen Softwarestandes aWS mit vorbestimmten Kontrollwerten K verglichen. Die Kontrollwerte K sind vorzugsweise in dem Steuergerät 8 gespeichert und entsprechen jeweils einer vom Steuergerätevertreiber 1 zugelassenen Modifikation des Original-Softwarestandes.

Ergibt die Zulässigkeitsprüfung S20 eine zulässige Modifikation (JA), so folgt Verfahrensschritt S21. Falls eine nicht zugelassene Modifikation im Schritt S20 festgestellt wird, so folgt Verfahrensschritt S22 (NEIN) .

### Verfahrensschritt S21:

Das Label L des aktuell geladenen Softwarestandes aSW und die Checksumme Cks des aktuell geladenen Softwarestandes aSW werden bereitgestellt. Weiterhin wird der Motorbetrieb des Motors, der durch das Motorsteuergerät oder Steuergerät gesteuert wird, zugelassen.

### Verfahrensschritt S22:

Zumindest das Label L und die Checksumme Cks des aktuell geladenen, nicht-zugelassenen Softwarestandes aSW werden bereitgestellt. Der Motorbetrieb wird des Weiteren gesperrt.

### Verfahrensschritt S11:

Nach der Durchführung einer Modifikationsprüfung (S10), die festgestellt hat, dass der aktuell geladene Softwarestand aSW dem Original-Softwarestand entspricht, wird eine Statusmeldung S generiert, welche den unmodifizierten Status des Original-Softwarestandes angibt.

### Verfahrensschritt S30:

Ein Parametersatz P, welcher vorzugsweise zumindest die Checksumme Cks und das Label L des aktuell geladenen Softwarestandes aSW beinhaltet, wird von dem Steuergerät 8 an eine Empfangsvorrichtung 2 des Steuergerätevertreibers 1 übertragen. Dies folgt auf die Verfahrensschritte S21 und S22. Dahingegen folgt auf den Verfahrensschritt S11 die Übertragung der generierten Statusmeldung S, vorzugsweise jeweils nach Ablauf eines vorbestimmten Zeitintervalls an die Empfangsvorrichtung 2 des Steuergerätevertreibers 1.

Das Übertragen des Parametersatzes P bzw. der Statusmeldung S an die Empfangsvorrichtung 2 des Steuergerätevertreibers 1 wird mittels einer Übertragungseinheit 5 durchgeführt.

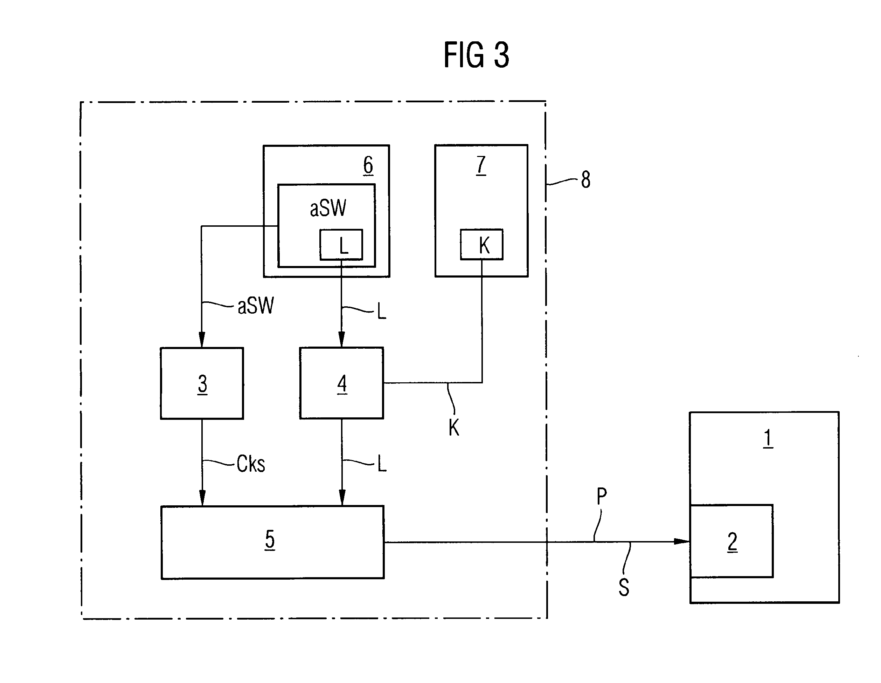

In Fig. 3 ist ein bevorzugtes Ausführungsbeispiel der erfindungsgemäßen Vorrichtung zur Durchführung des oben erläuterten Verfahrens dargestellt. Das Steuergerät 8 weist eine Modifikationsprüfeinheit 3, eine Zulässigkeitsprüfeinheit 4 und eine Übertragungseinheit 5 auf. Die Modifikationsprüfeinheit 3 führt eine Modifikationsprüfung des in dem Steuergerät 8 aktuell geladenen Softwarestandes aSW durch. Der Softwarestand aSW ist beispielsweise in einem ersten Speicher 6 gespeichert. Bei der Modifikationsprüfung stellt die Modifikationsprüfeinheit 3 zumindest eine Checksumme Cks des aktuell geladenen Softwarestandes aSW bereit und stellt zumindest fest, ob der aktuell geladene Softwarestand aSW gegenüber einem Original-Softwarestand des Steuergerätevertreibers 1 modifiziert wurde.

Die Zulässigkeitsprüfeinheit 4 führt eine Zulässigkeitsprüfung durch, falls eine Modifikation des Original-Softwarestandes festgestellt wurde. Bei der Zulässigkeitsprüfung vergleicht die Zulässigkeitsprüfeinheit 4 ein Label L des aktuell geladenen Softwarestandes aSW mit vorbestimmten Kontrollwerten K. Die Kontrollwerte K entsprechen jeweils einer von dem Steuergerätevertreiber 1 zugelassenen Modifikation des Original-Softwarestandes und sind beispielsweise in einem zweiten Speicher 7 des Steuergeräts 8 gespeichert.

Die Übertragungseinheit 5 überträgt einen Parametersatz P, der zumindest die Checksumme Cks und das Label L des aktuell geladenen Softwarestandes aSW beinhaltet von dem Steuergerät 8 an die Empfangsvorrichtung 2 des Steuergerätevertreibers 1.

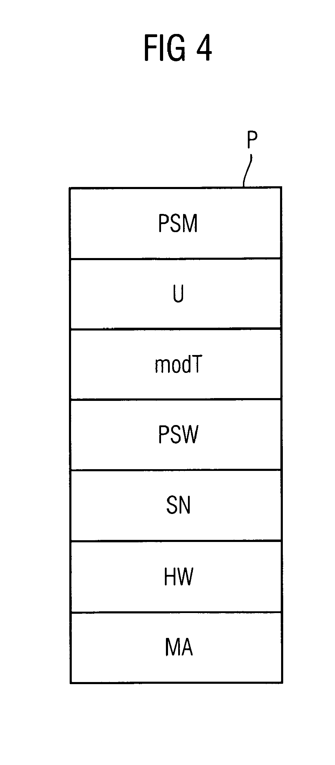

Fig. 4 zeigt ein schematisches Blockdiagramm eines bevorzugten Ausführungsbeispiels des Parametersatzes P. Vorzugsweise überträgt die Übertragungseinheit 5 nicht nur die Checksumme Cks und das Label L des aktuell geladenen Softwarestandes aSW von dem Steuergerät 8 an die Empfangsvorrichtung 2 des Steuergerätevertreibers 1, sondern zusätzlich die folgenden Parameter. Der Parametersatz P beinhaltet vorzugsweise eine Positionsangabe PSM der Modifikationen des aktuell geladenen Softwarestandes aSW und/oder eine Umfangsangabe U der Modifikationen des aktuell geladenen Softwarestandes aSW und/oder die modifizierten Teilbereiche modT des aktuell geladenen Softwarestandes aSW und/oder eine weltweite Positionsangabe PSW des Steuergeräts 8, welche beispielsweise GPS ermittelt wird, und/oder eine Modifikationsangabe MA, die angibt, durch welche Modifikationseinheit die Modifikation des Originalsoftwarestandes durchgeführt wurde. Weiter weist der Parametersatz P vorzugsweise eine Seriennummer SN oder eine Hardware-Kennung HW des Steuergeräts (8) auf.

Obwohl die vorliegende Erfindung vorstehend anhand der bevorzugten Ausführungsbeispiele beschrieben wurde, ist sie darauf nicht beschränkt, sondern auf vielfältige Art und Weise modifizierbar. Beispielsweise ist es denkbar, dass der von dem Steuergerät an die Empfangsvorrichtung des Steuergerätevertreibers übertragene Parametersatz weitere steuergerätespezifische Parameter beinhaltet, wie beispielsweise das Datum der Auslieferung oder der Herstellung des Steuergeräts. Weiterhin ist es denkbar, die Kontrollwerte oder auch den als Referenz verwendeten Original-Softwarestand in einem Speicher eines externen, mit dem Steuergerät koppelbaren Diagnosegerätes zu speichern.

## Patentansprüche

1. Verfahren zur Erfassung einer Modifikation eines Softwarestandes eines Steuergeräts (8) eines Kraftfahrzeuges mit den Schritten:
- Durchführen einer Modifikationsprüfung des in dem Steuergerät (8) aktuell geladenen Softwarestandes (aSW), welche zumindest einen von der Modifikationsprüfung abhängigen ersten Parameter (Cks) bereitstellt und dazu geeignet ist, zumindest eine Modifikation des aktuell geladenen Softwarestandes (aSW) gegenüber einem Original-Softwarestand festzustellen;
- Durchführen einer Zulässigkeitsprüfung einer festgestellten Modifikation, welche zumindest einen von der Zulässigkeitsprüfung abhängigen zweiten Parameter (L) bereitstellt; und
- Übertragen eines Parametersatzes (P), welcher zumindest den ersten Parameter (Cks) und den zweiten Parameter (L) beinhaltet, an eine Empfangsvorrichtung (2).

2. Verfahren nach Anspruch 1,
**dadurch gekennzeichnet,**
**dass** der Parametersatz (P) an eine Empfangsvorrichtung (2) eines Steuergerätevertreibers (1), der das Steuergerät (8) vertreibt, übertragen wird.

3. Verfahren nach Anspruch 1 oder 2,
**dadurch gekennzeichnet,**
**dass** der erste Parameter (Cks) als eine Checksumme (Cks) des aktuell geladenen Softwarestandes (aSW) und/oder der zweite Parameter (L) als ein Label (L) des aktuell geladenen Softwarestandes (aSW) ausgebildet ist, wobei das Label (L) bei der Zulässigkeitsprüfung mit vorbestimmten Kontrollwerten (K) verglichen wird.

4. Verfahren nach Anspruch 1, 2 oder 3,
**dadurch gekennzeichnet,**
**dass** eine Vergleichsprüfung zumindest eines Teils des aktuell geladenen Softwarestandes (aSW) mit zumindest einem entsprechenden Teil eines Duplikates des Original-Softwarestandes oder eine Modifikationsprüfung zumindest eines Teils des in dem Steuergerät (8) aktuell geladenen Softwarestandes (aSW) durchgeführt wird, bei welcher zumindest eine Positionsangabe (PSM), die eine Position der Modifikation oder mehrere Positionen der Modifikationen des aktuell geladenen Softwarestandes (aSW) angibt, und/oder eine Umfangsangabe (U), die den Umfang der Modifikation oder der Modifikationen des aktuell geladenen Softwarestandes (aSW) gegenüber dem Original-Softwarestand angibt, und/oder die modifizierten Teilbereiche (modT), die gegenüber dem Original-Softwarestand modifiziert sind, bereitgestellt werden.

5. Verfahren nach Anspruch 4,
**dadurch gekennzeichnet,**
**dass** der Parametersatz (P) weiter beinhaltet:
- die Positionsangabe (PSM) und/oder
- die Umfangsangabe (U) und/oder
- die modifizierten Teilbereiche (modT) und/oder
- eine weltweite Positionsangabe (PSW) des Steuergeräts (8) und/oder
- eine Seriennummer (SN) oder eine Hardware-Kennung (HW) des Steuergeräts (8) und/oder
- eine Modifikationsangabe (MA), die angibt, durch welche Modifikationseinheit, insbesondere Rapid-Prototyping-Einheit, die Modifikation des Original-Softwarestandes durchgeführt wurde.

6. Verfahren nach Anspruch 5,
**dadurch gekennzeichnet,**
**dass** eine Modifikation des Original-Softwarestandes nur zugelassen wird, falls das Steuergerät (8) eine vorbestimmte eindeutige Kennzeichnung, insbesondere eine Seriennummer (SN), oder Hardware-Kennung (HW) aufweist.

7. Verfahren nach Anspruch 1 oder einem der nachfolgenden Ansprüche 2 bis 6,
**dadurch gekennzeichnet,**
**dass** das Übertragen des Parametersatzes (P) an die Empfangsvorrichtung (2) des Steuergerätevertreibers (1) mittels einer Übertragungseinheit (5) durchgeführt wird, welche als Funkübertragungseinheit, als eine satellitengestützte Übertragungseinheit, als eine Telekommunikationseinrichtung des Kraftfahrzeuges, als ein Telematiksystem des Kraftfahrzeuges, als ein durch ein Diagnosegerät auslesbarer Speicher oder als eine Speicherkarte ausgebildet ist, die in das Steuergerät einsteckbar ist.

8. Verfahren nach Anspruch 7,
**dadurch gekennzeichnet,**
**dass** eine Modifikation des Original-Softwarestandes nur als zulässig interpretiert wird, falls das Steuergerät (8) die Übertragungseinheit (5) aufweist.

9. Verfahren nach Anspruch 1 oder einem der Ansprüche 2 bis 8,
**dadurch gekennzeichnet,**
**dass** eine Modifikation des Original-Softwarestandes oder des aktuell geladenen Softwarestandes (aSW) mittels Rapid-Prototyping durchgeführt wird.

10. Verfahren nach Anspruch 1 oder einem der Ansprüche 2 bis 9,
**dadurch gekennzeichnet,**
**dass** nach der Durchführung einer Modifikationsüberprüfung, welche feststellt, dass der aktuell geladene Softwarestand (aSW) dem Original-Softwarestand entspricht, eine Statusmeldung (S), welche den unmodifizierten Status des Original-Softwarestandes angibt, jeweils nach Ablauf eines vorbestimmten Zeitintervalls an die Empfangsvorrichtung (2) des Steuergerätevertreibers (1) übertragen wird.

11. Verfahren nach Anspruch 1 oder einem der Ansprüche 2 bis 10,
**dadurch gekennzeichnet,**
**dass** die Kontrollwerte (K) in dem Steuergerät (8) gespeichert werden und jeweils einer vom Steuergerätevertreiber (1) zugelassenen Modifikation des Original-Softwarestandes entsprechen.

12. Computerprogramm mit Programmcode-Mitteln, um ein Verfahren gemäß einem der Ansprüche 1 bis 11 durchzuführen, wenn das Programm auf einem Steuergerät (8) oder einem Computer ausgeführt wird.

13. Computerprogramm mit Programmcode-Mitteln gemäß Anspruch 12, die auf einen computerlesbaren Datenträger gespeichert sind.

14. Datenträger, auf dem eine Datenstruktur gespeichert ist, die nach einem Laden in einem Arbeits- und/oder Hauptspeicher eines Computers oder eines Steuergeräts (8) das Verfahren nach einem der Ansprüche 1 bis 11 ausführt.

15. Computerprogramm-Produkt mit auf einem maschinenlesbaren Träger gespeicherten Programmcode-Mitteln, um alle Schritte gemäß den Ansprüchen 1 bis 11 durchzuführen, wenn das Programm auf einem Steuergerät oder einem Computer ausgeführt wird.

16. Vorrichtung zur Durchführung des Verfahrens nach einem oder mehreren der Ansprüche 1 bis 11 aufweisend:
- eine Modifikationsprüfeinheit (3), welche eine Modifikationsprüfung des in dem Steuergerät (8) aktuell geladenen Softwarestandes (aSW) durchführt, wobei die Modifikationsprüfeinheit (3) zumindest einen von der Modifikationsprüfung abhängigen ersten Parameter (Cks) bereitstellt und dazu geeignet ist, zumindest eine Modifikation des aktuell geladenen Softwarestandes (aSW) gegenüber einem Original-Softwarestand festzustellen;
- eine Zulässigkeitsprüfeinheit (4), welche eine Zulässigkeitsprüfung einer festgestellten Modifikation durchführt, wobei die Zulässigkeitsprüfeinheit (4) zumindest einen von der Zulässigkeitsprüfung abhängigen zweiten Parameter (L) bereitstellt; und
- eine Übertragungseinheit (5), welche einen Parametersatz (P), der zumindest den ersten Parameter (Cks) und den zweiten Parameter (L) beinhaltet, an eine Empfangsvorrichtung (2) überträgt.
